# EUROPEAN PATENT APPLICATION

(11) **EP 4 589 183 A1**
(43) Date of publication of application: **23.07.2025**
(21) Application number: 23865010.5
(22) Date of filing: 16.06.2023
(51) Int. Cl.: F16K 11/087

(54) **FLOW PATH SWITCHING VALVE**

(30) Priority: 14.09.2022 JP 2022146486
(71) Applicant: Fujikoki Corporation, Tokyo 158-0082 (JP)
(72) Inventor: KONDO, Daisuke, Tokyo 158-0082 (JP); MOCHIZUKI, Kenichi, Tokyo 158-0082 (JP)
(74) Representative: Ter Meer Steinmeister & Partner
(86) International application number: PCT/JP2023/022507
(87) International publication number: WO 2024/057647

(57) **Abstract**

A flow path switching valve includes plural valve units in each of which a communication state of plural flow paths is changed by rotating a valve body provided in a valve chamber of a valve main body, a gear shaft that rotates a valve body of one valve unit, a gear shaft that rotates a valve body of the other valve unit, a rotation drive part for rotating the gear shafts, and a driving force distribution mechanism that distributes a rotational driving force of the rotation drive part to the two gear shafts.

## Description

### Technical Field

The present disclosure relates to a flow path switching valve.

### Background Art

Specification of Chinese Patent Application Publication No. 111828682 discloses a control valve (flow path switching valve) having a valve body that rotates in the valve body and having a plurality of communication ports (pipe joints).

### SUMMARY OF INVENTION

### Technical Problem

**In** the above-described conventional example, a control member (rotation drive part) for rotating the valve body is provided.

For example, it is conceivable to connect control valves having a plurality of ports to each other to switch a plurality of flow paths, but the number of rotation drive parts is required as many as the number of valve bodies.

The disclosure provides a flow path switching valve in which the number of rotation drive parts is reduced.

### Solution to Problem

A first aspect is a flow path switching valve including a plurality of valve units in each of which a communication state of a plurality of flow paths is changed by rotating a valve body provided in a valve chamber of a valve main body; a first valve shaft that rotates the valve body of one valve unit; a second valve shaft that is provided parallel with the first valve shaft and rotates the valve body of the other valve unit; a rotation drive part for rotating the first valve shaft and the second valve shaft; and a driving force distribution mechanism that distributes a rotational driving force of the rotation drive part to the first valve shaft and the second valve shaft.

In the flow path switching valve according to the first aspect, the driving force of the rotation drive part is distributed to the first valve shaft and the second valve shaft by the driving force distribution mechanism, the valve body of the one valve unit can be rotated by the first valve shaft, and the valve body of the other valve unit can be rotated by the second valve shaft.

That is, in the flow path switching valve, the valve body of each valve unit can be rotated by a small number of rotation drive parts, and the communication state of the plurality of flow paths can be changed.

According to a second aspect, in the flow path switching valve according to the first aspect, in the valve main body, a first port and a second port through which a fluid flows in and out are formed at a wall surface forming a valve chamber, and a third port is formed at a bottom surface of the valve chamber, in the valve body, a flow path communicable with any one of the first port, the second port, and the third port is formed, the valve unit includes a first flow path communicating with the first port, a second flow path provided parallel with the first flow path, with the valve main body interposed between the first flow path and the second flow path, and communicating with the second port, and a third flow path communicating with the third port and having an opening on a side opposite from the third port, the first flow path of the one valve unit is connected and coupled to the second flow path of the other valve unit, and the driving force distribution mechanism transmits the rotational driving force to the first valve shaft and the second valve shaft, and rotates the valve body such that a communication state of the first port, the second port, and the third port is selectively switched through the flow path of the valve body.

In this flow path switching valve, by rotating the valve body, the communication state of the first port, the second port, and the third port of the valve chamber can be selectively switched through the passage of the valve body.

By connecting and coupling the first flow path of one valve unit to the second flow path of the other valve unit, it is possible to increase variations in switching of the flow path as compared with a case in which the first flow path is not connected.

According to a third aspect, in the flow path switching valve according to the first aspect or the second aspect, the driving force distribution mechanism includes a first gear connected to the first valve shaft, a second gear connected to the second valve shaft, and a third gear connected to the rotation drive part and meshing with the first gear and the second gear.

In the flow path switching valve according to the third aspect, by rotationally driving the third gear by the rotation drive part, the first gear and the second gear meshing with the third gear can be simultaneously rotationally driven, and the first valve shaft connected to the first gear and the second valve shaft connected to the second gear can be simultaneously rotated.

According to a fourth aspect, in the flow path switching valve according to the third aspect, a number of teeth of the third gear is smaller than a number of teeth of the first gear and a number of teeth of the second gear.

By making the number of teeth of the third gear smaller than the number of teeth of the first gear and the number of teeth of the second gear, the rotation drive part can function as a speed reducer.

According to a fifth aspect, in the flow path switching valve according to the third aspect or the fourth aspect, the third gear is provided between the first gear and the second gear.

In the flow path switching valve in which the one valve unit and the other valve unit are disposed side by side, the third gear is provided between the first gear and the second gear, such that the rotation drive part that rotationally drives the third gear can be disposed between the one valve unit and the other valve unit, and the driving force distribution mechanism can be compactly assembled.

When an interval between the first valve shaft and the second valve shaft is considered to be constant, diameters of the first gear and the second gear when the first gear of the one valve unit meshes with the second gear of the other valve unit and the third gear meshes with either the first gear or the second gear are larger than diameters of the first gear and the second gear when the third gear is provided between the first gear and the second gear as in the fifth aspect.

That is, when the third gear is provided between the first gear and the second gear as in the fifth aspect, the diameters of the first gear and the second gear can be reduced as compared with a case in which the first gear and the second gear are directly meshed with each other, and the driving force distribution mechanism can be compactly assembled.

According to a sixth aspect, in the flow path switching valve according to any one of the third aspect to the fifth aspect, the valve main body has an opening part through which the valve body is capable of being inserted into the valve chamber, the driving force distribution mechanism includes a unit-side gear case that closes the opening part of the one valve unit and the opening part of the other valve unit and connects the one valve unit and the other valve unit, and a concave part is formed at the unit-side gear case on a side opposite from the valve chamber, and the first gear, the second gear, and the third gear are disposed in the concave part.

In the flow path switching valve according to the sixth aspect, the unit-side gear case has a first function of connecting the one valve unit and the other valve unit and a second function as a gear box in which the first gear, the second gear, and the third gear are disposed, and the number of components can be reduced as compared with a case in which the two functions are configured by separate members.

According to a seventh aspect, in the flow path switching valve according to the sixth aspect, the unit-side gear case is welded to the valve main body of the one valve unit and the valve main body of the other valve unit.

By welding the unit-side gear case to the valve main body of the one valve unit and the valve main body of the other valve unit, the valve main body of the one valve unit and the valve main body of the other valve unit can be firmly connected.

According to an eighth aspect, in the flow path switching valve according to the seventh aspect, the concave part of the unit-side gear case is closed by a gear case cover welded to the unit-side gear case.

In the flow path switching valve according to the eighth aspect, since the concave part of the unit-side gear case is closed by the gear case cover, the concave part in which the first gear, the second gear, and the third gear are disposed can be sealed.

### Advantageous Effects of Invention

According to the disclosure, it is possible to obtain a flow path switching valve in which the number of rotation drive parts is minimized.

### BRIEF DESCRIPTION OF DRAWINGS

Fig. 1 is a perspective view illustrating an overall configuration of a flow path switching valve according to an embodiment of the disclosure.
Fig. 2 is a partially broken perspective view illustrating a flow path switching valve in which two valve units are vertically overlapped and two valve bodies are simultaneously rotated.
Fig. 3 is a partially broken perspective view illustrating the valve unit.
Fig. 4 is a partially broken perspective view illustrating the valve unit.
Fig. 5 is a front view illustrating a valve body.
Fig. 6 is a bottom view illustrating the valve body.
Fig. 7 is a perspective view illustrating an overall configuration of a flow path switching valve in which a part of a driving force distribution mechanism is broken.
Fig. 8 is a longitudinal sectional view illustrating the flow path switching valve.
Fig. 9 is a plan view illustrating an inside of the driving force distribution mechanism.
Fig. 10 is a horizontal sectional view illustrating the valve unit.
Fig. 11 is a front view illustrating a state in which the valve unit is viewed from a male joint side of a first flow path.
Fig. 12 is a plan view illustrating a main part of a driving force distribution mechanism according to another embodiment.
Fig. 13 is a plan view illustrating a main part of a driving force distribution mechanism according to still another embodiment.
Fig. 14 is a plan view illustrating a state in which a left small sector gear meshes with a large sector gear in the main part of the driving force distribution mechanism according to still another embodiment.
Fig. 15 is a plan view illustrating a state in which a right small sector gear meshes with a large sector gear in the driving force distribution mechanism of Fig. 14.

### DESCRIPTION OF EMBODIMENTS

Hereinafter, modes for carrying out the disclosure will be described with reference to the drawings. In the drawings, components denoted by the same reference numerals mean the same or similar components. Overlapping descriptions and reference numerals in the embodiments described below may be omitted. The drawings used in the following description are all schematic, and dimensional relationships of respective elements, ratios of respective elements, and the like illustrated in the drawings do not necessarily coincide with actual ones. Dimensional relationships of the respective elements, ratios of the respective elements, and the like do not necessarily coincide among the plurality of drawings.

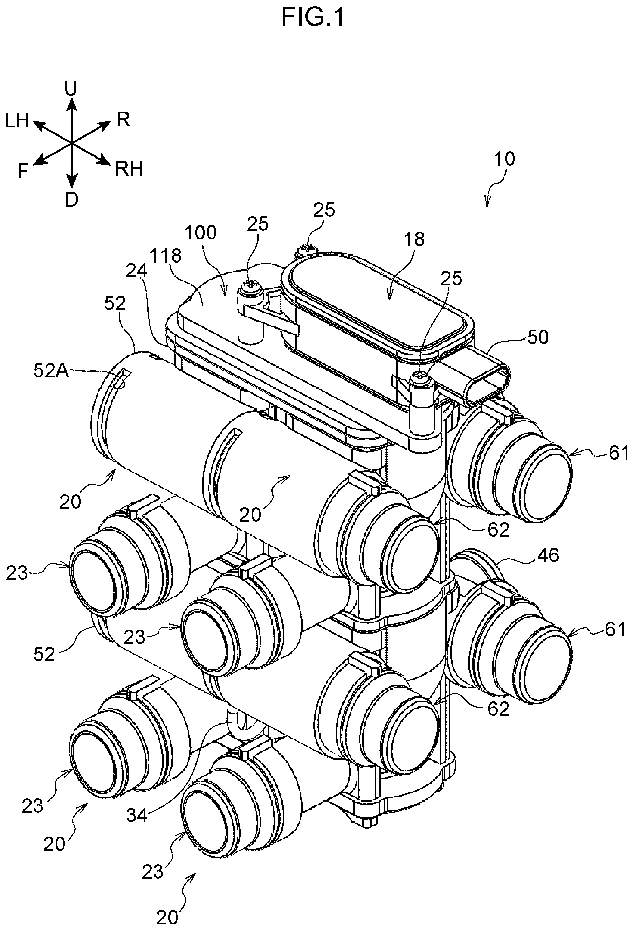

In the present specification, the description representing a position and direction such as up and down, left and right, front and back, and the like is based on the direction arrow display of Fig. 1, and does not refer to the position and direction in the actual use state. In Fig. 1, "U" indicates an upward direction (upper side), "D" indicates a downward direction (lower side), "LH" indicates a left direction (left side), "RH" indicates a right direction (right side), "F" indicates a front direction (front side), and "R" indicates a rear direction (rear side). An "up-down direction" means a direction of an arrow U and a direction of an arrow D. A "left-right direction" means a direction of an arrow LH and a direction of an arrow RH. A "front-rear direction" means a direction of an arrow F and a direction of an arrow R.

Fig. 1 is a perspective view illustrating an overall configuration of a flow path switching valve 10 according to an embodiment of the disclosure. In the flow path switching valve 10, two valve units 20 are connected in the left-right direction, and the other valve units 20 are respectively overlapped on the lower side of each valve unit 20.

That is, four valve units 20 are combined.

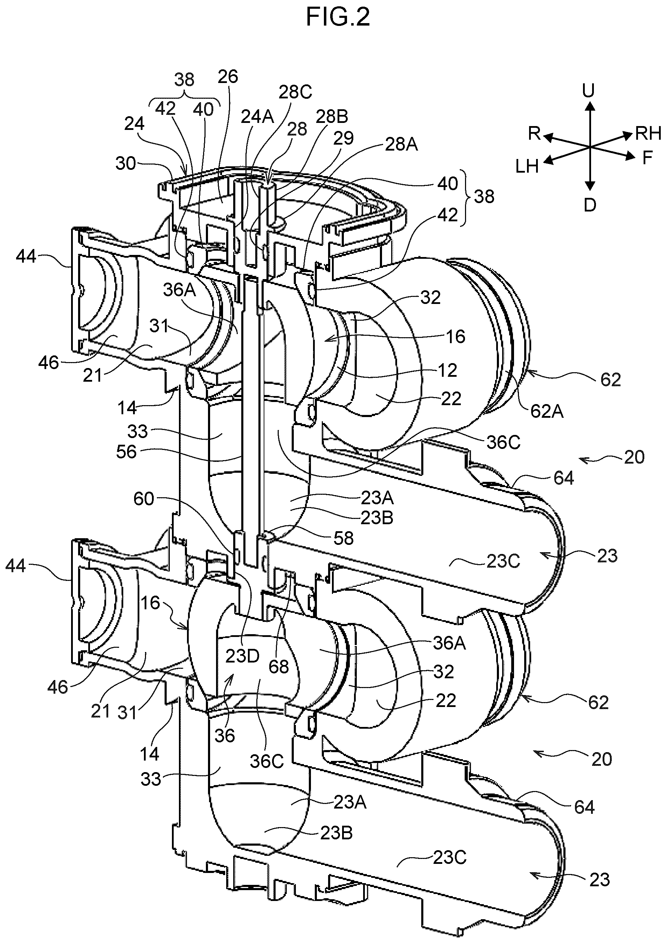

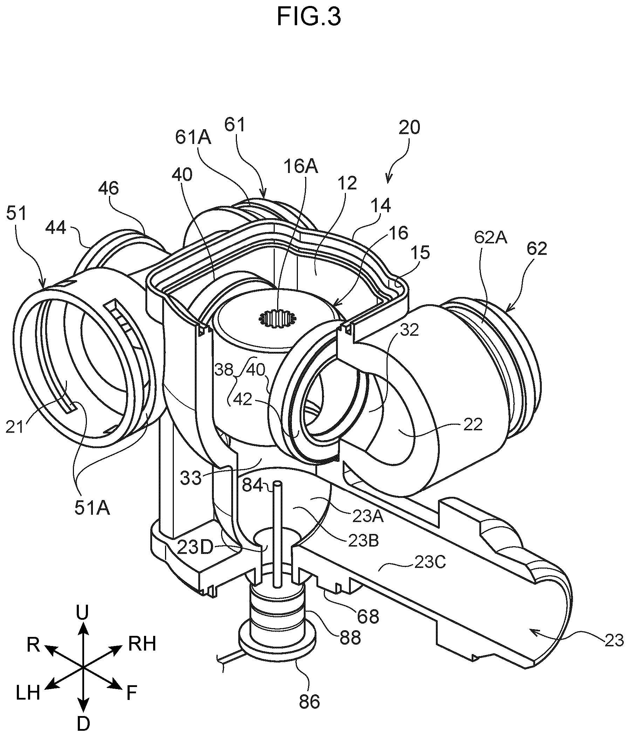

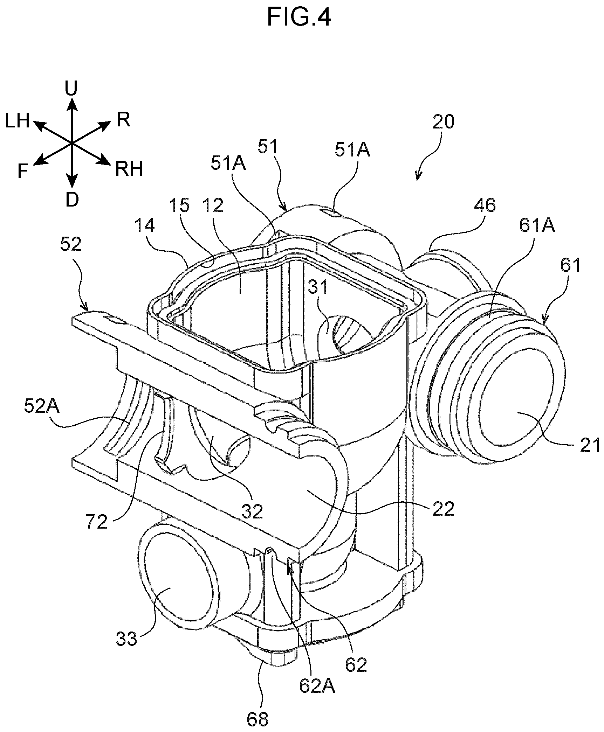

Fig. 2 is a partially broken perspective view illustrating the flow path switching valve 10 in which two valve units 20 are vertically overlapped and two valve bodies 16 are rotated by one rotation drive part 18. Fig. 2 corresponds to an example in which two upper and lower valve units 20 are extracted from Fig. 1. Figs. 3 and 4 are partially broken perspective views illustrating one valve unit 20.

The flow path switching valve 10 is used as, for example, a rotary three-way valve (Fig. 3) that switches a flow path of a fluid flowing in an engine room or the like of an automobile. As illustrated in Fig. 1, the flow path switching valve 10 has a valve unit 20, a rotation drive part 18, and a driving force distribution mechanism 100.

### [Valve Unit]

As illustrated in Figs. 2 to 4, the valve unit 20 of the present embodiment includes a valve main body 14, a valve body 16, a first flow path 21, a second flow path 22, and a third flow path 23. In the example illustrated in Fig. 3, the valve unit 20 is, for example, a three-way valve that switches between a state in which the first flow path 21 and the third flow path 23 communicate with each other, a state in which the second flow path 22 and the third flow path 23 communicate with each other, and a state in which the first flow path 21, the second flow path 22, and the third flow path 23 do not communicate with each other.

### (Valve Main Body)

In Figs. 3 and 4, the valve main body 14 is made of, for example, a synthetic resin, and a valve chamber 12 is formed inside. An upper direction of the valve chamber 12 is opened, and the valve body 16 and a sealing part 38 to be described later are inserted from the upper direction. That is, the valve main body 14 has an opening part 15 into which the valve body 16 and the sealing part 38 can be inserted on the upper side. On a wall surface forming the valve chamber 12, for example, a first port 31 and a second port 32 which face each other and through which a fluid flows in and out are formed. As an example, the first port 31 is formed at a rear wall surface of the valve chamber 12, and the second port 32 is formed at a front wall surface of the valve chamber 12. That is, the first port 31 and the second port 32 face each other in the front-rear direction of the valve chamber 12. A third port 33 is formed at a bottom surface of the valve chamber 12.

### (Valve Body)

In Figs. 2, 3, 5, and 6, the valve body 16 is a ball-shaped member made of, for example, a synthetic resin, and is rotatably disposed in the valve chamber 12. An insertion hole 16A into which a lower end of a gear shaft 28 described later is inserted is formed at an upper part of the valve body 16. The gear shaft 28 and the insertion hole 16A are engaged with each other around an axial direction of the gear shaft 28, and the rotation of the gear shaft 28 is transmitted to the valve body 16. A flow path 36 to be described below is formed in the valve body 16, and the insertion hole 16A penetrates, for example, to the flow path 36 of the valve body 16.

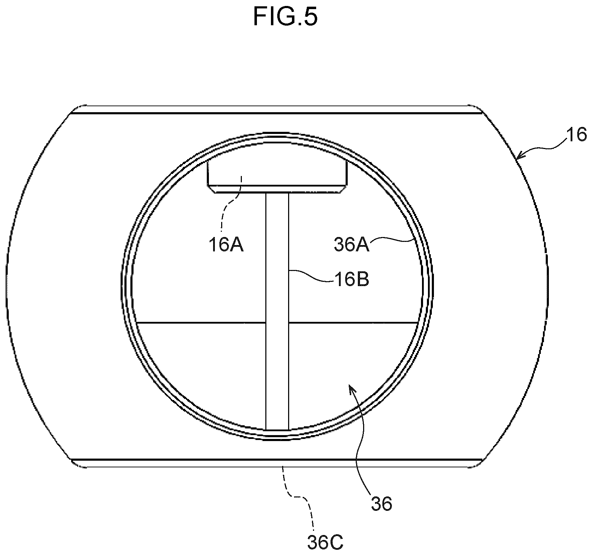

In order to allow the first port 31, the second port 32, and the third port 33 of the valve main body 14 to selectively communicate with each other, in other words, in order to selectively switch the communication state of the first port 31, the second port 32, and the third port 33, the flow path (internal flow path) 36 is provided inside the valve body 16. That is, by rotating the valve body 16, the flow path 36 can communicate with any one of the first flow path 21, the second flow path 22, and the third flow path 23. Specifically, as illustrated in Figs. 2 and 5, a lateral hole 36A leading from an outer periphery (side part) to the flow path 36 is formed in the valve body 16. A pilot hole 36C leading from an outer periphery (lower part) to the flow path 36 is formed in the valve body 16. The flow path 36 communicates from the lateral hole 36A to the pilot hole 36C. According to the state of the valve body 16, the lateral hole 36A can face the first port 31 or the second port 32. In any of the ports, in a state where the lateral hole 36A does not face, the valve body 16 is in close contact with a seat member 40 described later and is closed.

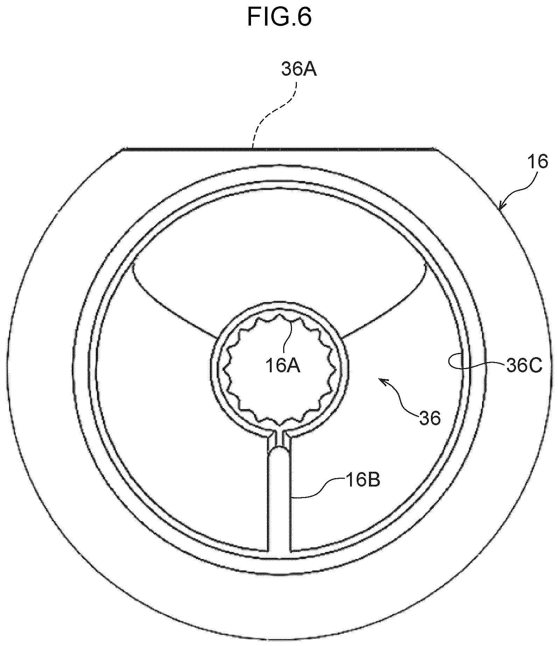

As illustrated in Figs. 5 and 6, a rib 16B extending in a direction (up-down direction) toward the third port 33 is formed in the flow path 36 of the valve body 16. The rib 16B is, for example, a thin plate-shaped protrusion, and is formed, for example, on an inner wall on a far side of the lateral hole 36A in the flow path 36 of the valve body 16.

In Figs. 2 and 3, the sealing parts 38 for sealing between the valve body 16 and the first port 31 and between the valve body 16 and the second port 32 are respectively provided. The sealing part 38 has, for example, a seat member 40 and an O-ring 42. The seat member 40 is made of, for example, a synthetic resin, and is formed in an annular shape having openings corresponding to the first port 31 and the second port 32. The seat member 40 is each disposed around the first port 31 and the second port 32 on an inner wall surface (front and rear wall surfaces of the valve chamber 12) of the valve main body 14. The valve body 16 is sandwiched between the two seat members 40, and is disposed so as to be rotatable and slidable while being in contact with each of the seat members 40.

A space between the seat member 40 and the valve main body 14 is sealed by the O-ring 42, for example, airtightly and watertightly. The O-ring 42 is attached to, for example, an O-ring groove (not illustrated) formed at the seat member 40.

As an example, polyphenylene sulfide (PPS) can be used for the valve main body 14 and the valve body 16, fluororesin (PTFE) can be used for the seat member 40, and synthetic rubber can be used for the O-ring 42.

### (First Flow Path, Second Flow Path, And Third Flow Path)

As illustrated in Fig. 3, the first flow path 21, the second flow path 22, and the third flow path 23 are, for example, pipe parts integrally configured with the valve main body 14. In other words, the first flow path 21 is a first port, the second flow path 22 is a second port, and the third flow path 23 is a third port.

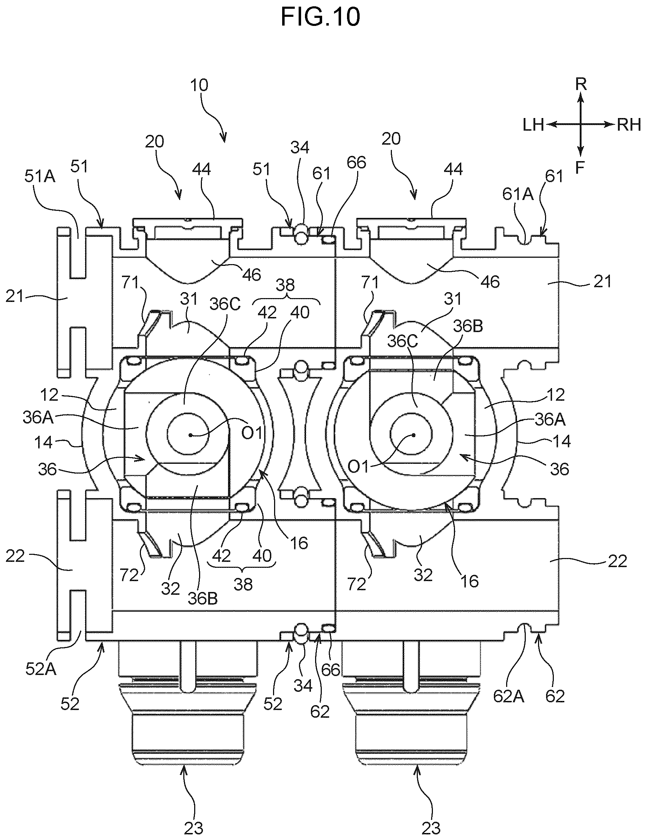

As illustrated in Figs. 2, 3, 4, and 10, the first flow path 21 is open at both ends, for example, and communicates with the first port 31 of the valve chamber 12. The first flow path 21 linearly extends, for example, in the left-right direction. The first port 31 is coupled to the middle of the first flow path 21. As a result, the first flow path 21 and the first port 31 are formed in a substantially T shape in plan view (see Fig. 10).

The second flow path 22 is provided parallel with the first flow path 21 with the valve main body 14 interposed therebetween, and has, for example, both ends opened and communicates with the second port 32. The second flow path 22 linearly extends, for example, in the left-right direction. The second port 32 is coupled to the middle of the second flow path 22. As a result, the second flow path 22 and the second port 32 are formed in a substantially T shape in plan view (see Fig. 10).

As illustrated in Figs. 3, 4, and 10, female joints 51 and 52 are respectively provided at one ends of the first flow path 21 and the second flow path 22. Male joints 61 and 62 are respectively provided at the other ends of the first flow path 21 and the second flow path 22. The male joints 61 and 62 are configured to be able to be coupled to the female joints 51 and 52. Annular grooves 61A and 62A are formed at the outer peripheries of the male joints 61 and 62. For example, a pair of arc-shaped slits 51A and 52A are formed at the female joints 51 and 52.

As illustrated in Figs. 1, 8, 9, and 10, the male joints 61 and 62 are respectively fitted into the female joints 51 and 52, and are prevented from coming off by fitting clips 34 into the grooves 61A and 62A through the slits 51A and 52A. The water-tightening of the coupling portion of each joint is performed by, for example, an O-ring 66. With such a joint structure, the first flow path 21 and the second flow path 22 of one valve unit 20 can be respectively connected and coupled to the first flow path 21 and the second flow path 22 of another valve unit 20.

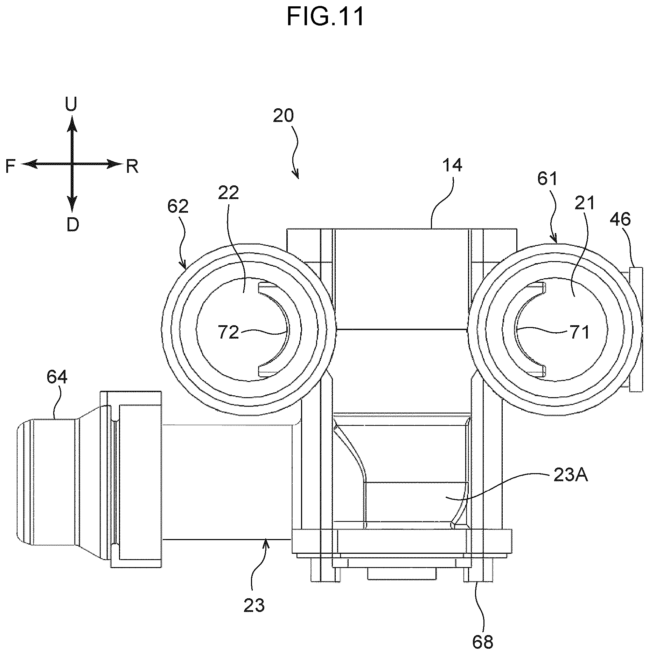

In Fig. 11, a first protrusion part 71 protruding from the first port 31 side toward an inside of the first flow path 21 is provided at a coupling part with the first port 31 in the first flow path 21. The first protrusion part 71 is, for example, an arc-shaped projection formed along the opening of the first port 31 with respect to the first flow path 21. The range of the first protrusion part 71 is, for example, less than half the circumference of an inner peripheral surface of the first flow path 21 on the first port 31 side. One surface of the first protrusion part 71 in the left-right direction is a concave surface obtained by extending a part of an inner wall of the first flow path 21. In the illustrated example, the first protrusion part 71 is provided on the left side of the first port 31. The first protrusion part 71 may be provided on the right side of the first port 31, or may be provided on both left and right sides of the first protrusion part 71.

A second protrusion part 72 protruding from the second port 32 side toward an inside of the second flow path 22 is provided at a coupling part with the second port 32 in the second flow path 22. The second protrusion part 72 is, for example, an arc-shaped projection formed along the opening of the second port 32 with respect to the second flow path 22. The range of the second protrusion part 72 is, for example, less than half the circumference of an inner peripheral surface of the second flow path 22 on the second port 32. One surface of the second protrusion part 72 in the left-right direction is a concave surface obtained by extending a part of an inner wall of second flow path 22. In the illustrated example, the second protrusion part 72 is provided on the left side of the second port 32. The second protrusion part 72 may be provided on the right side of the second port 32, or may be provided on both left and right sides of the second protrusion part 72.

As illustrated in Figs. 2 and 3, for example, a sub flow path 46 closed by a lid body 44 may be provided at a position facing the first port 31 in the first flow path 21. A space between the lid body 44 and an end of the sub flow path 46 is sealed by welding or is water-tight by a sealing member (not illustrated) such as an O-ring. The sub flow path 46 can also be used by removing the lid body 44. For example, a storage tank (not illustrated) can be coupled to the sub flow path 46.

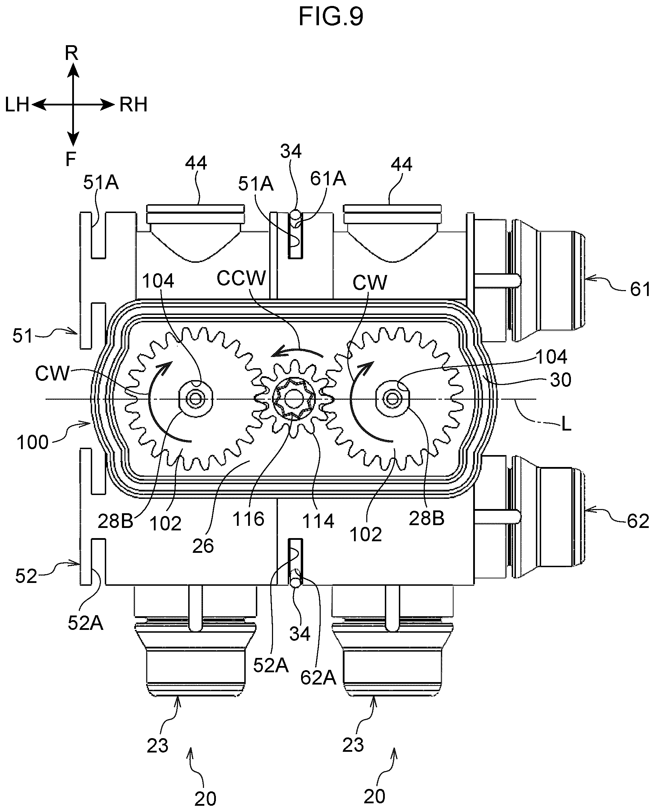

As illustrated in Figs. 9 and 10, pumps (not illustrated) can be attached to the female joint 51 or the male joint 61 of the first flow path 21 at a terminal end in the flow path switching valve 10 and the female joint 52 or the male joint 62 of the second flow path 22 at a terminal end. A pump (not illustrated) communicating with the first flow path 21 can supply a fluid from the other device to the first flow path 21 or supply a fluid in the first flow path 21 to the other device. The pump (not illustrated) communicating with the second flow path 22 can supply a fluid from the other device to the second flow path 22 or supply a fluid in the second flow path 22 to the other device via a joint 92.

As illustrated in Figs. 2 and 3, the third flow path 23 communicates with the third port 33, and the side opposite from the third port 33 is opened. Specifically, the third flow path 23 has a bent part 23A. The third port 33 is positioned above the bent part 23A. A terminal end of the third flow path 23 on the opening side is positioned, for example, in front of the bent part 23A, and protrudes, for example, forward of the second flow path 22. For example, a male joint 64 capable of being coupled to a pipe to the other device is provided at the terminal end of the third flow path 23 on the opening side.

For example, a spherical concave part 23B is provided at a portion facing the third port 33 in the bent part 23A of the third flow path 23, that is, below the third port 33. The concave part 23B is formed in a substantially hemispherical shape. The concave part 23B is recessed downward from a bottom 23C of the lateral flow path on the front side of the bent part 23A. As a result, a part of the fluid entering the third flow path 23 from the third port 33 once falls into the concave part 23B and then enters the lateral flow path of the third flow path 23.

In the example illustrated in Fig. 2, in the upper valve unit 20, a through-hole 23D is formed at a bottom of the concave part 23B. A valve shaft 58 can pass through the through-hole 23D. A space between the valve shaft 58 and the through-hole 23D is water-tight by an O-ring 60. In a case in which the other valve unit 20 is not overlapped on the lower side, like the lower valve unit 20 in Fig. 2, for example, a structure without the through-hole 23D at the bottom of the concave part 23B is adopted. The through-hole 23D may be provided or may be closed by another member (for example, a closing part 86). For example, as illustrated in Fig. 3, the closing part 86 may include a temperature sensor 84. The temperature sensor 84 is supported by, for example, the closing part 86, and is disposed such that a distal end thereof is positioned in the third flow path 23. For example, an O-ring 88 is attached to the closing part 86. The O-ring 88 ensures watertightness between the closing part 86 and the through-hole 23D. By using the temperature sensor 84, the temperature in the third flow path 23 can be accurately measured.

### (Driving Force Distribution Mechanism)

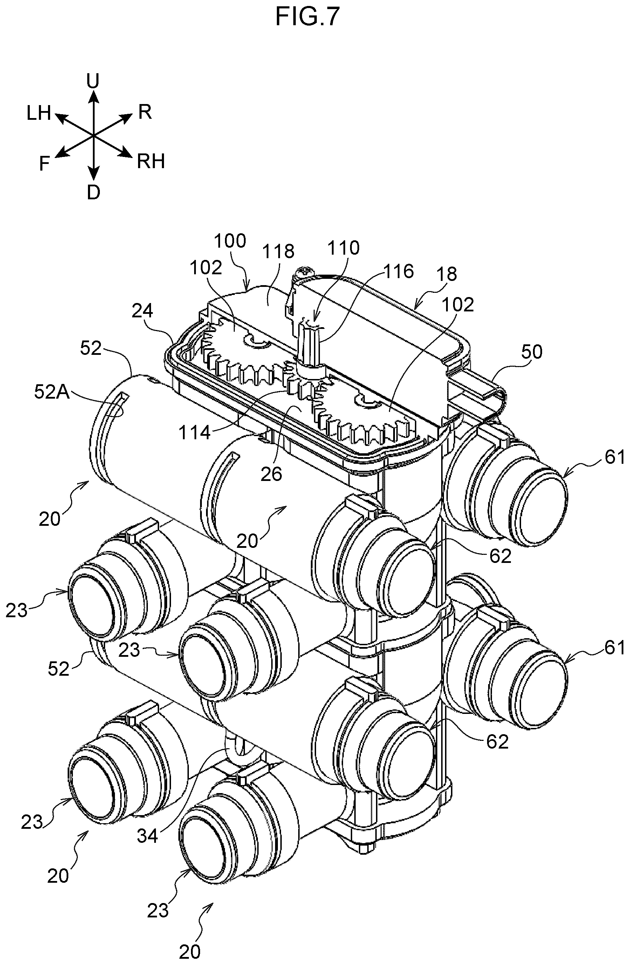

As illustrated in Figs. 1 and 7, the rotation drive part 18 is provided on the two adjacent upper valve main bodies 14 via the driving force distribution mechanism 100.

The driving force distribution mechanism 100 includes a gear 102 and a small gear 114 described later.

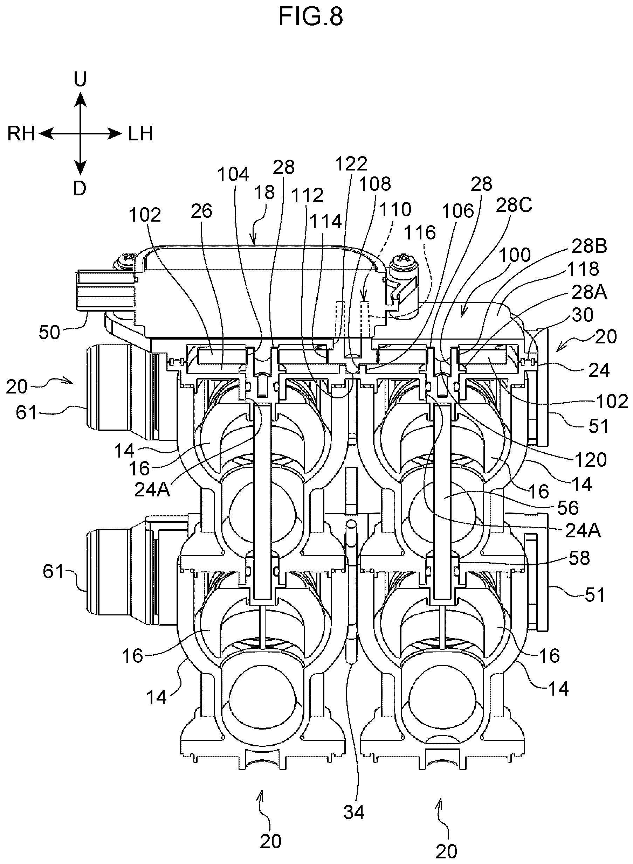

The driving force distribution mechanism 100 includes a unit-side gear case 24 that connects the two valve main bodies 14, and as illustrated in Fig. 8, an upward opening part 15 (Fig. 3) in the valve chamber 12 of the upper valve main body 14 is closed by the unit-side gear case 24. In other words, the unit-side gear case 24 has a shape that closes the opening parts 15 of the two valve main bodies 14.

As illustrated in Fig. 8, as an example, the unit-side gear case 24 is welded to the inside of the opening part 15 of each valve main body 14 in a state of being inlay fitted.

As illustrated in Figs. 2, 8, and 9, the unit-side gear case 24 is provided with a convex part 30 at its outer peripheral portion. The convex part 30 faces or abuts on a peripheral edge of a gear case cover 118 described later. The convex part 30 may be a melting margin.

As described above, in the flow path switching valve 10 of the present embodiment, the upper two valve main bodies 14 adjacent to each other in the left-right direction in the unit-side gear case 24 of the rotation drive part 18, that is, the two valve units 20 adjacent to each other in the left-right direction are connected.

A concave part 26 in which the gear 102 and the small gear 114 to be described later are disposed is formed at an upper part of the unit-side gear case 24.

As illustrated in Fig. 2, a hole 24A is formed at the unit-side gear case 24, and a gear shaft 28 described below penetrates the hole 24A.

As described above, a lower end of the gear shaft 28 is inserted into the insertion hole 16A of the valve body 16, and an axially intermediate part is rotatably inserted into the hole 24A. An O-ring 29 or an X-ring (not illustrated) that seals a gap with the hole 24A is attached to the axially intermediate part of the gear shaft 28. The O-ring 29 or the X-ring ensures airtightness and watertightness between the gear shaft 28 and the hole 24A.

As illustrated in Figs. 2, 8, and 9, the gear shaft 28 protruding from the upper surface of the unit-side gear case 24 is formed with a flange 28A and a fitting part 28B to be fitted to a fitting hole 104 of the gear 102 to be described below.

The gear 102 of the present embodiment is, for example, a spur gear, but may be a helical gear. A fitting hole 104 to be fitted to the fitting part 28B of the gear shaft 28 is formed at the center part of the gear 102, and the fitting part 28B of the gear shaft 28 is inserted and fitted to the fitting hole 104.

As illustrated in Fig. 8, a boss 106 is formed at the upper surface of the unit-side gear case 24 at an intermediate part between one hole 24A and the other hole 24A.

The boss 106 has a bearing hole 108. A shaft part 112 of a geared shaft 110 that receives a driving force from the rotation drive part 18 is rotatably inserted into the bearing hole 108.

Below the boss 106, a side wall of one valve main body 14 and a side wall of the other valve main body 14 are close to each other, and both the side walls close to each other are welded to the unit-side gear case 24 below the boss 106, such that the vicinity of the boss 106 has high rigidity and is hardly deformed. Therefore, the geared shaft 110 can be supported in a stable state by the boss 106.

In the geared shaft 110, a small gear 114 that is a spur gear is provided on the upper side of the shaft part 112, and a fitting shaft 116 is provided on the upper side of the small gear 114. The shaft part 112, the small gear 114, and the fitting shaft 116 are integrally formed.

As illustrated in Figs. 7 to 9, the small gear 114 meshes with one gear 102 and the other gear 102. The small gear 114 of the present embodiment has fewer teeth than the gear 102. In the present embodiment, as an example, the number of teeth of the small gear 114 is 12 and the number of teeth of the gear 102 is 24, but the number of teeth of each gear is not limited to the number of teeth of the present embodiment, and can be appropriately changed as necessary.

One of the two gears 102 is an example of a first gear of the disclosure, the other of the two gears 102 is an example of a second gear of the disclosure, and the small gear 114 is an example of a third gear of the disclosure.

In Figs. 7 and 8, the gear case cover 118 is disposed above the unit-side gear case 24.

As illustrated in Fig. 8, the gear case cover 118 is formed with a pair of convex parts 120 to be inserted into a concave part 28C formed at the upper end of the gear shaft 28, and a hole 122 through which the fitting shaft 116 of the geared shaft 110 passes.

As an example, a peripheral edge part of the gear case cover 118 is welded to a peripheral edge part of the unit-side gear case 24, whereby the unit-side gear case 24 and the gear case cover 118 are integrated. The unit-side gear case 24 and the gear case cover 118 constitute a gear box (housing).

As illustrated in Fig. 9, in the driving force distribution mechanism 100 of the present embodiment, the small gear 114 is disposed between one gear 102 and the other gear 102. More specifically, in the driving force distribution mechanism 100 of the present embodiment, the center of the geared shaft 110 (small gear 114) is positioned on a straight line L connecting a center of one gear 102 and a center of the other gear 102.

Note that "the small gear 114 is disposed between the one gear 102 and the other gear 102" means a state in which the small gear 114 meshes with the one gear 102 and the other gear 102, and is not limited to a case in which the center of the small gear 114 is positioned on the straight line L connecting the center of the one gear 102 and the center of the other gear 102, and also includes a case in which the center of the small gear 114 is not positioned on the straight line L.

As illustrated in Figs. 1, 7, and 8, the rotation drive part 18 is fixed onto the gear case cover 118 of the driving force distribution mechanism 100 using, for example, a screw 25 (Fig. 1).

### (Rotation Drive Part)

The rotation drive part 18 is a device connected to the valve unit 20 via the driving force distribution mechanism 100. The rotation drive part 18 transmits the rotational force to the valve body 16 such that the communication state of the first port 31, the second port 32, and the third port 33 is selectively switched through the flow path 36 of the valve body 16.

The rotation drive part 18 of the present embodiment is, for example, a geared motor. The rotation drive part 18 is provided with, for example, a connector 50 to which wiring for communication with a control unit and power supply is coupled.

The fitting shaft 116 of the geared shaft 110 is coupled to a rotation shaft (not illustrated) of the rotation drive part 18.

Therefore, when the rotation shaft (not illustrated) of the rotation drive part 18 rotates, a rotational driving force of the rotation drive part 18 is transmitted to the valve body 16 via the small gear 114 and the gear 102.

### [Overlapping of Valve Units]

As illustrated in Fig. 1, in the present embodiment, the other valve unit 20 is overlapped and connected to the lower side of the one valve unit 20 on the upper side. As illustrated in Fig. 2, a portion of the upper valve unit 20 overlapping the lower valve unit 20 is a lid 68 that closes the valve chamber 12 of the lower valve unit 20. In the closing structure, a bottom part of the upper valve main body 14 is welded in a state of being inlay fitted to the inside of the opening part 15 in the lower valve main body 14.

As illustrated in Fig. 2, the present embodiment has a structure in which one valve unit 20 is vertically overlapped and connected to the other valve unit 20, and the two valve bodies 16 in the two valve units 20 are simultaneously rotated. In this example, the gear shaft 28 of the upper valve unit 20 and the valve shaft 58 of the lower valve unit 20 are connected by a connecting shaft 56. The connecting shaft 56 connects the gear shaft 28 and the valve shaft 58 through the inside of the upper valve body 16 and the longitudinal flow path of the third flow path 23. When the upper gear shaft 28 is rotationally driven, the rotation is transmitted to the lower valve shaft 58 via the connecting shaft 56, and the upper and lower valve bodies 16 rotate in synchronization with each other.

The gear shaft 28, the connecting shaft 56, and the valve shaft 58 are examples of a first valve shaft and a second valve shaft of the disclosure.

As illustrated in Fig. 8, the gear shaft 28, the connecting shaft 56, and the valve shaft 58 of the left valve unit 20 and the gear shaft 28, the connecting shaft 56, and the valve shaft 58 of the right valve unit 20 are provided in parallel with each other.

### (Operation)

The flow path switching valve 10 of the present embodiment is configured as described above, and the operation thereof will be described below.

In the flow path switching valve 10 according to the present embodiment, when the geared shaft 110 is rotated by the rotation drive part 18, the small gear 114 rotates the gear 102. As illustrated in Fig. 9, as an example, when the small gear 114 is rotated in a direction of an arrow CCW (counterclockwise direction), both the one gear 102 and the other gear 102 rotate in a direction of an arrow CW (clockwise direction) opposite to the rotation direction of the small gear 114.

In the present embodiment, since the number of teeth of the small gear 114 is 12 and the number of teeth of the gear 102 is 24, the driving force distribution mechanism 100 has a function of distributing the rotation drive part 18 to one of the left and right valve units 20 and the other of the left and right valve units 20 and a function as a speed reducer.

In the flow path switching valve 10 of the present embodiment, since the valve bodies 16 of the two upper and lower valve units 20 on one of the left and right sides and the valve bodies 16 of the two upper and lower valve units 20 on the other of the left and right sides are driven by one rotation drive part 18, the number of rotation drive parts 18 can be reduced as compared with a case in which the two upper and lower valve units 20 on one of the left and right sides and the two upper and lower valve units 20 on the other of the left and right sides are driven by individual rotation drive parts 18. In other words, according to the flow path switching valve 10 of the present embodiment, the valve bodies 16 of all the valve units 20 can be simultaneously rotated by the minimum rotation drive part 18, the number of components can be reduced, and the control of the rotation drive part 18 is also simplified.

For example, assuming that the torque required to rotate the valve bodies 16 of the two upper and lower valve units 20 on one of the left and right sides is A, in a case in which the valve bodies 16 of the two upper and lower valve units 20 on one of the left and right sides are rotated by one rotation drive part 18, the torque of the rotation drive part 18 is required to be at least A. When a reduction ratio of the driving force distribution mechanism 100 is 1, the torque of the rotation drive part 18 that rotates the valve bodies 16 of all the valve units 20 is required to be at least 2A.

In this regard, since the driving force distribution mechanism 100 of the present embodiment is a speed reducer having a reduction ratio of 2, the rotational torque required for the rotation drive part 18 is A, and there is no need to replace the rotation drive part 18 with a larger one with the larger torque.

In the flow path switching valve 10 according to the present embodiment configured as described above, by rotating the valve body 16, the communication state of the first port 31, the second port 32, and the third port 33 of the valve chamber 12 can be selectively switched through the flow path 36 of the valve body 16, and the communication state of the plurality of flow paths can be changed.

### [Other Embodiments]

Although examples of the embodiments of the disclosure have been described above, the embodiments of the disclosure are not limited to the above, and it is a matter of course that various modifications can be made without departing from the gist of the disclosure in addition to the above.

The valve unit 20 of the embodiment is a three-way valve, but may have a valve structure other than the three-way valve, for example, a four-way valve, an on-off valve, or the like.

The valve body 16 of the embodiment has a shape having a spherical surface, but may have another shape such as a cylindrical shape as long as it is a rotating shape.

In the driving force distribution mechanism 100 of the embodiment, the center of the geared shaft 110 (small gear 114) is positioned on the straight line L connecting the center of one gear 102 and the center of the other gear 102 (see Fig. 9), but the center of the geared shaft 110 may be positioned at a position shifted from the straight line L.

In the flow path switching valve 10 of the embodiment, the two valve units 20 are vertically connected, but three or more valve units 20 may be vertically connected.

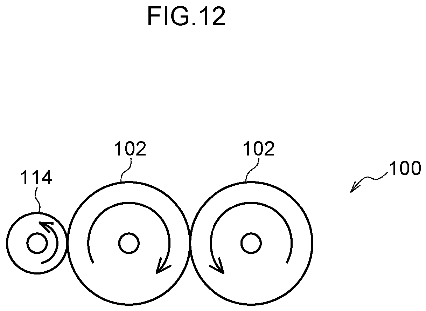

In the driving force distribution mechanism 100 of the embodiment, the small gear 114 is disposed between the two gears 102 to rotate the two gears 102 in the same direction. However, as illustrated in Fig. 12, the rotation direction of the one gear 102 and the rotation direction of the other gear 102 can be reversed by directly meshing the one gear 102 with the other gear 102 and meshing the small gear 114 with any one of the one gear 102 and the other gear 102.

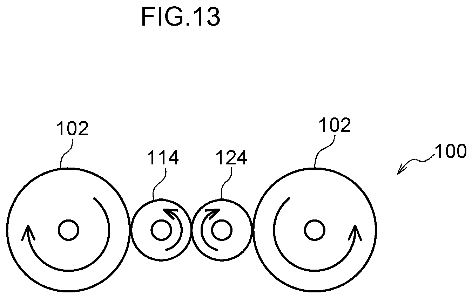

As illustrated in Fig. 13, by meshing the small gear 124 between the small gear 114 and the other gear 102, the rotation direction of the one gear 102 and the rotation direction of the other gear 102 can be reversed.

In the embodiment, the flow path switching valve 10 with the rotation drive part 18 on the upper side has been described, but the posture when using the flow path switching valve 10 is not limited to the posture described in the drawings with the rotation drive part 18 on the upper side.

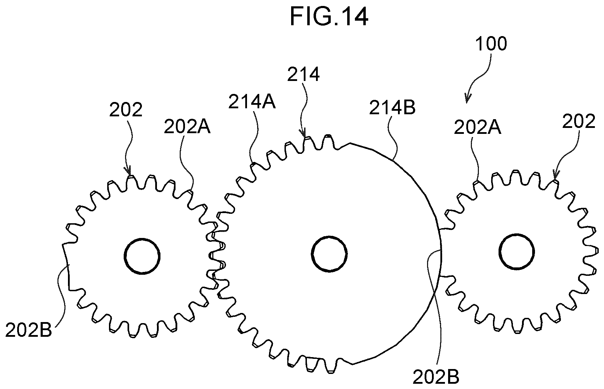

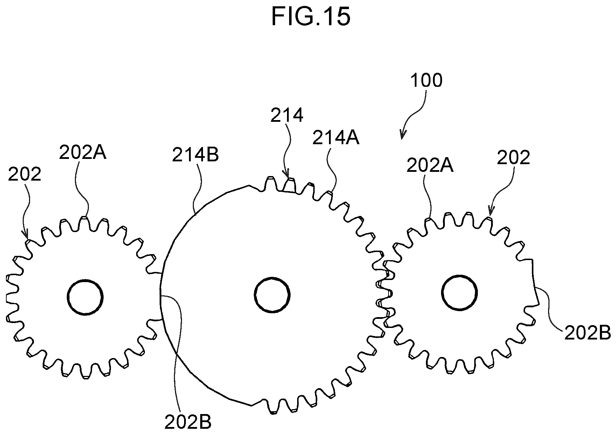

As illustrated in Figs. 14 and 15, the driving force distribution mechanism 100 may have a large sector gear 214 having a toothless part 214B and a pair of small sector gears 202 having a toothless part 202B. In the large sector gear 214, about a half in the circumferential direction is a series of toothed parts 214A, and the remaining portion is the toothless part 214B. In the small sector gear 202, the most part in the circumferential direction is a series of toothed parts 202A, and the remaining portion is the toothless part 202B. The number of teeth of the toothed part 214A of the large sector gear 214 and the number of teeth of the toothed part 202A of each small sector gear 202 are, for example, equal to each other. The toothless part 202B of the small sector gear 202 is, for example, a concave surface having a curvature equivalent to a curvature of the toothless part 214B of the large sector gear 214.

The large sector gear 214 is a driving gear and the small sector gear 202 is a driven gear. The large sector gear 214 meshes with one small sector gear 202 (for example, the left small sector gear 202 in Fig. 14) according to an angular position of the toothed part 214A, and distributes a driving force. At this time, in the other small sector gear 202 (the small sector gear 202 on the right side in Fig. 14), the toothless part 202B abuts on the toothless part 214B of the large sector gear 214, and the toothless parts 202B and 214B slide on each other when the large sector gear 214 rotates. As a result, the other small sector gear 202 stops without the driving force being distributed from the large sector gear 214.

When the large sector gear 214 is meshed with the other small sector gear 202 (the right small sector gear 202 in Fig. 15), a driving force is distributed from the large sector gear 214 to the small sector gear 202. At this time, in one small sector gear 202 (the small sector gear 202 on the left side in Fig. 15), the toothless part 202B abuts on the toothless part 214B of the large sector gear 214, and the toothless parts 202B and 214B slide on each other when the large sector gear 214 rotates. As a result, the one small sector gear 202 is stopped without the driving force being distributed from the large sector gear 214.

As described above, by using the large sector gear 214 and the pair of small sector gears 202, any one of the small sector gears 202 is driven by one rotation drive part 18 (Fig. 17), and the flow path switching between one valve unit 20 and the other valve unit 20 (see Fig. 9) can be performed independently. That is, the flow path of the other valve unit 20 can be switched without switching the flow path of the one valve unit 20, and the flow path of the one valve unit 20 can be switched without switching the flow path of the other valve unit 20.

The number of teeth of the toothed part 214A of the large sector gear 214 may not be equal to the number of teeth of the toothed part 202A of each small sector gear 202. Even when the toothless part is provided only in the large sector gear 214, the same effect can be obtained. That is, it is also possible to set the small sector gear 202 as a small gear whose entire circumference is the toothed part 202A, and to set a radius from the center of the large sector gear 214 to the outer periphery of the toothless part 214B such that the toothless part 214B of the large sector gear 214 does not come into contact with the small gear.

In the above example, the large sector gear 214 is a drive gear, and the small sector gear 202 is a driven gear. However, the arrangement of the large sector gear 214 and the small sector gear 202 may be interchanged. That is, a layout in which one small-sized sector gear is a drive gear and two large-sized sector gears are driven gears may be adopted. In this case, since the small-sized sector gear is the drive gear, an increase in torque of the large-sized sector gear can be expected.

The disclosure of Japanese Patent Application No. 2022-146486 filed on September 14, 2022 is incorporated herein by reference in their entirety.

All documents, patent applications, and technical standards described in this specification are incorporated herein by reference to the same extent as if each document, patent application, and technical standard were specifically and individually indicated to be incorporated by reference.

## Claims

1. A flow path switching valve comprising:
a plurality of valve units, in each of which a communication state of a plurality of flow paths is changed by rotating a valve body provided in a valve chamber of a valve main body;
a first valve shaft that rotates the valve body of one valve unit;
a second valve shaft that is provided parallel with the first valve shaft and rotates the valve body of another valve unit;
a rotation drive part for rotating the first valve shaft and the second valve shaft; and
a driving force distribution mechanism that distributes a rotational driving force of the rotation drive part to the first valve shaft and the second valve shaft.

2. The flow path switching valve according to claim 1, wherein:
in the valve main body, a first port and a second port through which a fluid flows in and out are formed at a wall surface forming the valve chamber, and a third port is formed at a bottom surface of the valve chamber,
in the valve body, a flow path communicable with any one of the first port, the second port, and the third port is formed,
the valve unit includes a first flow path communicating with the first port, a second flow path provided parallel with the first flow path, with the valve main body interposed between the first flow path and the second flow path, and communicating with the second port, and a third flow path communicating with the third port and which is open on a side opposite from the third port,
the first flow path of the one valve unit is connected and coupled to the second flow path of the other valve unit, and
the driving force distribution mechanism transmits a rotational driving force to the first valve shaft and the second valve shaft, and rotates the valve body such that a communication state of the first port, the second port, and the third port is selectively switched through the flow path of the valve body.

3. The flow path switching valve according to claim 1 or 2, wherein
the driving force distribution mechanism includes a first gear connected to the first valve shaft, a second gear connected to the second valve shaft, and a third gear connected to the rotation drive part and meshing with the first gear and the second gear.

4. The flow path switching valve according to claim 3, wherein
a number of teeth of the third gear is smaller than a number of teeth of the first gear and a number of teeth of the second gear.

5. The flow path switching valve according to claim 3, wherein
the third gear is provided between the first gear and the second gear.

6. The flow path switching valve according to claim 3, wherein:
the valve main body has an opening part through which the valve body is capable of being inserted into the valve chamber,
the driving force distribution mechanism includes a unit-side gear case that closes the opening part of the one valve unit and the opening part of the other valve unit and connects the one valve unit and the other valve unit, and
a concave part is formed at the unit-side gear case on a side opposite from the valve chamber, and the first gear, the second gear, and the third gear are disposed in the concave part.

7. The flow path switching valve according to claim 6, wherein
the unit-side gear case is welded to the valve main body of the one valve unit and the valve main body of the other valve unit.

8. The flow path switching valve according to claim 7, wherein
the concave part of the unit-side gear case is closed by a gear case cover welded to the unit-side gear case.
